# EUROPÄISCHE PATENTSCHRIFT

(11) **EP 0 590 197 B1**
(45) Veröffentlichungstag und Bekanntmachung des Hinweises auf die Patenterteilung: **08.05.1996**
(21) Anmeldenummer: 92116876.1
(22) Anmeldetag: 02.10.1992
(51) Int. Cl.: B23K 35/00, B23K 20/12, F01D 5/02

(54) **Bauelement und Verfahren zur Herstellung dieses Bauelements**
Component and process for manufacture
Composant et son procédé de fabrication

(43) Veröffentlichungstag der Anmeldung: 06.04.1994
(73) Patentinhaber: ASEA BROWN BOVERI AG, CH-5401 Baden (CH)
(72) Erfinder: Brogle, Erwin, W-7895 Klettgau-Griesen (DE); Gausmann, Dieter, W-7891 Weilheim (DE); Nazmy, Mohamed Y., CH-5442 Fislisbach (CH); Staubli, Markus, CH-5605 Dottikon (CH)
(74) Vertreter: Kaiser, Helmut, Dr.

(56) Entgegenhaltungen:
- EP-A- 0 368 642
- PATENT ABSTRACTS OF JAPAN vol. 14, no. 271 (M-983)12. Juni 1990 & JP-A-20 78 734 (MITSUBISHI HEAVY IND LTD) 19 März 1990
- PATENT ABSTRACTS OF JAPAN vol. 14, no. 407 (M-1019)4. September 1990 & JP-A-21 57 403 (MITSUBISHI HEAVY IND LTD) 18 Juni 1990
- PATENT ABSTRACTS OF JAPAN vol. 14, no. 416 (M-1021)7. September 1990 & JP-A-21 60 187 (NKK CORP) 20 Juni 1990
- PATENT ABSTRACTS OF JAPAN vol. 14, no. 416 (M-1021)7. September 1990 & JP-A-21 60 188 (NKK CORP) 20 Juni 1990

## Beschreibung

### TECHNISCHES GEBIET

Bei der Erfindung wird ausgegangen von einem Bauelement, enthaltend einen Körper aus einer Legierung auf der Basis eines Gamma-Titanaluminids, einen Stahlkörper und ein Zwischenstück aus einer Nickel-Basislegierung mit einem Nickelanteil kleiner 65 Gewichtsprozent, über welches Zwischenstuck der Gamma-Titanaluminidkörper und der Stahlkörper starr miteinander verbunden sind, wobei die Verbindung zwischen dem Gamma-Titanaluminidkörper und dem Zwischenstück durch Reibschweissen hergestellt ist. Die Erfindung betrifft auch ein Verfahren zur Herstellung dieses Bauelementes.

### STAND DER TECHNIK

Ein als Rotor eines Turboladers ausgebildetes Bauelement der eingangs genannten Art und ein Verfahren zur Herstellung dieses Rotor sind aus JP-A-2-78734 bekannt. Dieser Rotor weist ein Turbinenrad aus gamma-Titanaluminid und eine Stahlwelle auf. Zwischen Turbinenrad und Stahlwelle ist ein Zwischenstuck aus einer Nickelbasis-Legierung vorgesehen, welches mit dem Turbinenrad reibverschweisst ist. Die Nickelbasis-Legierung kann eine unter dem Handelsnamen Hastelloy X vertriebene Legierung mit einem Nickelanteil von ca. 47 Gewichtsprozent oder eine unter dem Handelsnamen Inconel 617 vertriebene Legierung mit einem Nickelanteil von ca. 55 Gewichtsprozent sein. In den Tabellen 2 und 3 ist dokumentiert, dass mit der Legierung Hastelloy X keine für eine Anwendung als Turbolader ausreichende mechanische Festigkeit der Reibschweissverbindung erreicht wird, wohingegen die Legierung Inconel 617 mit gamma-Titanaluminid eine Reibschweissverbindung bildet, die bereits bei einer Zugbelastung von 19,4 kg/mm² aufbricht.

Ein als Rotor eines Turboladers ausgebildetes Baulement und ein Verfahren zur Herstellung dieses Bauelementes sind ferner von Y. Nishiyama et al., "Development of Titanium Aluminide Turbocharger Rotors", High Temperature Aluminides and Intermetallics, Edited by S.H. Whang et al., The Minerals, Metals & Materials Society, 1990 beschrieben. Der vorbekannte Rotor enthält ein Turbinenrad aus einem Gamma-Titanaluminid, welches über ein Zwischenstück aus einer Nickel-Basislegierung mit einem Nickelgehalt von über 70 Gewichtsprozent durch Reibschweissen mit einer Stahlwelle verbunden ist. Ein solcher Rotor zeichnet sich durch eine vom Gamma-Titanaluminid bestimmte Scherfestigkeit aus, da die Nickel-Basislegierung wie ein Puffer wirkt und beim direkten Reibschweissen von Gamma-Titanaluminid und Stahl auftretende spröde Phasen durch Bildung einer kontinuierlichen Diffusionsschicht an der Verbindungsstelle von Gamma-Titanaluminidkörper und Zwischenstück vermieden werden. Hochlegierte Nickel-Basislegierungen weisen ein bei vergleichsweise hohen Temperaturen liegendes Schmelzintervall auf. Damit die beim Reibschweissen auftretenden Diffusionsvorgänge aktiviert werden, wird bei dieser Legierung eine vergleichsweise grosse Energie benötigt.

Reibschweissverfahren zum Verbinden zweier intermetallischer Verbindungen auf der Basis von Titan und Aluminium bzw. einer intermetallischen Verbindung auf der Basis von Titan und Aluminium und einer Titan-Basislegierung sind in JP-A-2160187 bzw. JP-A-2160188 beschrieben.

### DARSTELLUNG DER ERFINDUNG

Der Erfindung, wie sie in den Patentansprüchen 1 und 7 definiert ist, liegt die Aufgabe zugrunde, ein Bauelement der eingangs genannten Art anzugeben, welches trotz grosser mechanischer Festigkeit einfach herzustellen ist und zugleich ein Verfahren anzugeben, mit dessen Hilfe dieses Bauelement in kostengünstiger Weise hergestellt werden kann.

Das erfindungsgemässe Bauelement zeichnet sich sowohl bei Raumtemperatur als auch bei Temperaturen bis 700°C durch eine hohe mechanische Festigkeit aus. Typische Zugfestigkeitswerte bei Raumtemperatur betragen 500 MPa. Dies ist eine Folge des geeignet gewählten Materials des Zwischenstücks mit einem 3 -7 Gewichtsprozent betragenden Anteil an Niob. Durch einen vergleichsweise niedrigen Anteil an Nickel wird erreicht, dass die Reibschweissverbindung des Gamma-Titanaluminidkörpers mit dem Zwischenstück bei vergleichsweise niedrigen Temperaturen hergestellt werden kann, so dass beim Reibschweissen in dem zur Versprödung neigenden Gamma-Titanaluminidkörper das Risiko von Rissbildungen erheblich herabgesetzt wird.

Zu bevorzugen sind Zwischenstücke mit einem vergleichsweise grossen Eisenanteil, welcher das Reibschweissen bei tiefen Temperaturen begünstigt.

Das zur Herstellung des erfindungsgemässen Bauelementes vorgesehene Verfahren nach der Erfindung zeichnet sich dadurch aus, dass es einen vergleichsweise geringen Energiebedarf aufweist und selbst dann noch versprödungsfreie Bauelemente liefert, wenn die bei der Ausführung des Verfahrens vorgesehenen Prozessparameter erheblich schwanken. Es ist daher für eine Massenfertigung hervorragend geeignet.

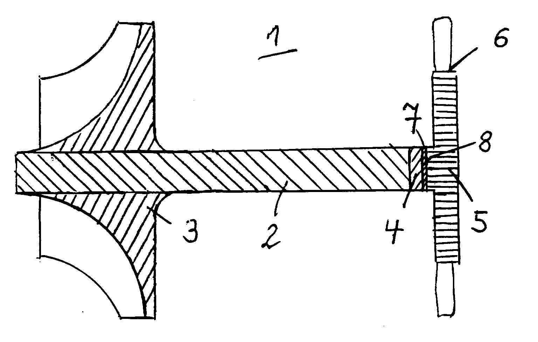

### KURZE BESCHREIBUNG DER ZEICHNUNG

Nachfolgend wird die Erfindung anhand einer Zeichnung näher erläutert. Hierbei zeigt die einzige Figur eine Aufsicht auf einen axial geführten Schnitt durch ein als Rotor eines Turboladers ausgebildetes Bauelement nach der Erfindung.

### WEG ZUR AUSFÜHRUNG DER ERFINDUNG

In der Figur bezeichnet 1 einen Rotor eines Turboladers mit einem als Welle des Turboladers verwendeten zylinderförmigen Stahlkörper 2, dessen eines Ende ein beispielsweise aus einer Aluminiumlegierung bestehendes Verdichterrad 3 trägt, und dessen anderes Ende über ein Zwischenstück 4 mit einem Gamma-Titanaluminidkörper 5 starr verbunden ist. Dieser Gamma-Titanaluminidkörper 5 ist zumindest ein Teil eines dem Abgas einer Verbrennungsmaschine ausgesetzten Turbinenrades 6 des Turboladers. Das Bezugszeichen 7 bezeichnet eine Diffusionsschicht, welche die starre Verbindung zwischen dem Zwischenstück 4 und dem Gamma-Titanaluminidkörper 5 bewirkt.

Der Stahlkörper 2 weist eine Länge von beispielsweise 200 mm und einen Durchmesser von beispielsweise 45 mm auf. Er kann aus einem niedriglegierten Stahl, beispielsweise einem Vergütungsstahl mit einem Kohlenstoffanteil von ca. 0,4 Gewichtsprozent, einem Chromanteil von ca. 1 Gewichtsprozent sowie einem vergleichsweise geringen Molybdänanteil, bestehen.

Das Zwischenstück 4 ist als Scheibe mit einem an den Stahlkörper 2 angepassten Durchmesser von beispielsweise ebenfalls 45 mm und einer deren Pufferwirkung zwischen dem Stahlkörper 2 und dem Gamma-Titanaluminidkörper 5 begünstigenden Dicke von beispielsweise 10 bis 30 mm ausgebildet und besteht aus einer Nickel-Basislegierung mit einem Nickelanteil kleiner 65 Gewichtsprozent. Eine solche Legierung kann sowohl mit dem Stahlkörper 2 als auch mit dem Gamma-Titanaluminidkörper 5 durch Schweissen verbunden werden, ohne dass bei hohen mechanischen und thermischen Belastungen während des Betriebes des Turboladers ein Aufbrechen der Schweissstellen oder ein Versprödungsbruch des Rotors 1, insbesondere im Bereich des gegenüber Stahl und der Nickel-Basislegierung vergleichsweise spröden Gamma-Titanaluminidkörpers 5, zu befürchten ist. Besonders zu bevorzugen ist eine Nickel-Basislegierung mit einem Eisen-anteil zwischen 10 und 30, vorzugsweise zwischen 25 und 25 Gewichtsprozent, welche bei guten mechanischen Eigenschaften zudem ein den Schweissvorgang bei tiefen Temperaturen besonders besonders begünstigendes vergleichsweise niedriges Schmelzintervall aufweist. Durch einen Niobanteil von 3 bis 7 Gewichtsprozent werden die mechanischen Eigenschaften der Schweissstellen zusätzlich gesteigert. Besonders bewährt hat sich eine Nickel-Basislegierung mit folgender Zusammensetzung:
- 18-20: Gewichtsprozent Chrom,
- 18-22: Gewichtsprozent Eisen,
- 2-4: Gewichtsprozent Molybdän,
- 4-6: Gewichtsprozent Niob,
- bis zu 1: Gewichtsprozent Aluminium,
- bis zu 2: Gewichtsprozent Titan,
- bis zu 0,4: Gewichtsprozent Silicium,
- bis zu 0,4: Gewichtsprozent Mangan,
- bis zu 0,05: Gewichtsprozent Kohlenstoff,
Rest nicht zu vermeidende Verunreinigungen und Nickel. Eine derartige Legierung ist beispielsweise eine unter der Bezeichnung INCONEL 718 von der Firma INCO vertriebene Nickel-Basislegierung.

Der Gamma-Titanaluminidkörper 5 weist einen an das Zwischenstück 4 angepassten zylindrischen Ansatz 8 von beispielsweise ebenfalls 45 mm Durchmesser auf und ist von einer intermetallischen Verbindung auf der Basis eines dotierten Gamma-Titanaluminids gebildet. Zu bevorzugen sind hierbei als Dotierstoffe vor allem Bor oder Silicium sowie zusätzlich mindestens ein metallischer Dotierstoff, wie insbesondere Chrom, Hafnium, Mangan, Molybdän, Niob, Tantal, Vanadium und/oder Wolfram. Besonders gute mechanische Eigenschaften sind mit einem Gamma-Titanaluminid mit einem Alumniumanteil von ca. 28 bis 33 Gewichtsprozent, einem Wolframanteil von 5 bis 15 Gewichtsprozent, einem Siliciumanteil von 0,3 bis 3 Gewichtsprozent, Rest nicht zu vermeidende Verunreinigungen und Titan zu erreichen.

Der Rotor 1 wurde aus den einzelnen Komponenten wie folgt hergestellt:
Zunächst wurde das Zwischenstück 4 in einem routinemässig ausgeführten Reibschweissvorgang mit dem Stahlkörper 2 verbunden. Sodann wurden der Gamma-Titanaluminidkörper 5 mit dem aus dem Zwischenstück 4 und dem Stahlkörper 2 gebildeten Körper verbunden. Hierbei wurde besonders darauf geachtet, dass der Gamma-Titanaluminidkörper 5 und das Zwischenstück 4 in Richtung der gemeinsamen Achse von Stahlkörper 2 und Gamma-Titanaluminidkörper 5 plan aufeinander lagen. Nach entsprechender Ausrichtung des am Stahlkörper 2 angeschweissten Zwischenstückes 4 und des Gamma-Titanaluminidkörpers 5 wurden diese beiden Teile durch Reibschweissen starr miteinander verbunden. Zu diesem Zweck wurden der Stahlkörper 2 und damit das Zwischenstück 4 und der Gamma-Titanaluminidkörper 5 an einer Reibschweissmaschine bei einer Drehzahl von beispielsweise 500 Umdrehungen pro Minute unter einem Reibdruck, welcher einen vorgebenen ersten Grenzwert nicht überschritt, gegeneinander verdreht. Hierbei wurde die für den nachfolgenden Schweissvorgang ausreichende Energie in die Schweissstelle hineingeführt. Anschliessend wurden sodann der Gamma-Titanaluminidkörper 5 und das Zwischenstück 4 bei relativer Ruhe zueinander unter einem Stauchdruck, welcher einen höher als der erste Grenzwert liegenden zweiten Grenzwert nicht überschritt, unter Bildung der Diffusionsschicht 7 verschweisst. Die Diffusionsschicht 7 bildete sich überwiegend an der auf dem Gamma-Titanaluminidkörper 5 aufliegenden Seite des Zwischenstückes 4 in einer Dicke von bis zu 100 µm aus und enthielt vor allem Titan und Aluminium, aber auch die zusätzlichen im Gamma-Titanaluminidkörper enthaltenden Dotierungsstoffe. Von besonderem Vorteil ist es hierbei, dass das Reibschweissen wegen des vergleichsweise niedrigschmelzenden Materials des Zwischenstückes 4 bereits nach verhältnismässig kurzer Zeit und bei schonenden Bedingungen für den relativ spröden Gamma-Titanaluminidkörper 5 ausgeführt wurde.

Durch geeignete Bemessung der Zeit, der Drehgeschwindigkeit und des Reibdruckes beim Reibvorgang als auch durch geeignete Dimensionierung des Stauchdruckes beim Schweissvorgang wurden Versprödungen und Rissbildungen im Gamma-Titanaluminidkörper 5 vermieden. Besonders günstige Ergebnisse bei vergleichsweise raschen Fertigungszeiten wurden erzielt, wenn der Reibdruck während des Reibvorganges ca. 200 N/mm² und der Stauchdruck beim Schweissvorgang bei ruhenden Körpern ca. 300 N/mm² erreichte.

Besonders bewährt hat es sich, den Reibdruck beim Reibvorgang während des Verdrehens des Gamma-Titanaluminidkörpers 5 und des Zwischenstückes 4 gegeneinander stufenweise bis zum ersten Grenzwert zu erhöhen, da dann besonders materialschonend geschweisst werden konnte. Hierbei betrug der Reibdruck in einer ersten Stufe bis zu 150 N/mm².

Die Reibzeit betrug in der erste Stufe höchstens 60 s, vorzugsweise 40 s. Die gesamte Reibzeit betrug höchstens 120 s, vorzugsweise 60 bis 80 s.

Der reibgeschweisste Rotor 1 wurde nach der Fertigstellung mit einer Geschwindigkeit von ca. 150°C pro Stunde auf ca 600°C aufgeheizt, einige Stunden auf dieser Temperatur gehalten und anschliessend mit einer Geschwindigkeit von ca. 50°C pro Stunde abgekühlt. Hierdurch wurden beim Reibschweissen möglicherweise im Stahlkörper 2 entstandene und zu einer Versprödung führende Spannungszustände entfernt.

Anhand von Zugversuchen ermittelte Festigkeitswerte derartig ausgebildeter und derartig hergestellter Bauelemente lagen bei Raumtemperatur überwiegend bei ca 500 MPa, wobei die Zerstörung entweder an der Diffusionsschicht 7 oder am Gamma-Titanaluminidkörper 5 eintrat. Diese hohen Festigkeitswerte reichen für zahllose Anwendungen des Bauelementes nach der Erfindung, wie insbesondere als Rotor eines Turboladers, vollkommen aus.

### BEZEICHNUNGSLISTE

- 1: Rotor
- 2: Stahlkörper
- 3: Verdichterrad
- 4: Zwischenstück
- 5: Gamma-Titanaluminidkörper
- 6: Turbinenrad
- 7: Diffusionsschicht
- 8: Ansatz

## Patentansprüche

1. Bauelement, enthaltend einen Körper (5) aus einer Legierung auf der Basis eines Gamma-Titanaluminids, einen Stahlkörper (2) und ein Zwischenstück (4) aus einer Nickel-Basislegierung mit einem Nickelanteil kleiner 65 Gewichtsprozent, über welches Zwischenstück (4) der Gamma-Titanaluminidkörper (5) und der Stahlkörper (2) starr miteinander verbunden sind, wobei die Verbindung zwischen dem Gamma-Titanaluminidkörper (5) und dem Zwischenstück (4) durch Reibschweissen hergestellt ist, dadurch gekennzeichnet, dass die Nickel-Basislegierung 3 bis 7 Gewichtsprozent Niob enthält.

2. Bauelement nach Anspruch 1, dadurch gekennzeichnet, dass die Nickel-Basislegierung zwischen 10 und 30 Gewichtsprozent Eisen enthält.

3. Bauelement nach Anspruch 2, dadurch gekennzeichnet, dass die Nickel-Basislegierung zwischen 15 und 25 Gewichtsprozent Eisen enthält.

4. Bauelement nach einem der Ansprüche 1 bis 3, dadurch gekennzeichnet, dass die Nickel-Basislegierung
18-20 Gewichtsprozent Chrom,
18-22 Gewichtsprozent Eisen,
2-4 Gewichtsprozent Molybdän,
4-6 Gewichtsprozent Niob,
bis zu 1 Gewichtsprozent Aluminium,
bis zu 2 Gewichtsprozent Titan,
bis zu 0,4 Gewichtsprozent Silicium,
bis zu 0,4 Gewichtsprozent Mangan,
bis zu 0,05 Gewichtsprozent Kohlenstoff, und
als Rest nicht zu vermeidende Verunreinigungen und Nickel enthält.

5. Bauelement nach einem der Ansprüche 1 bis 4, dadurch gekennzeichnet, dass das Zwischenstück den Gamma-Titanaluminidkörper und den Stahlkörper um ca. 10 bis 30 mm voneinander beabstandet.

6. Bauelement nach einem der Ansprüche 1 bis 5, dadurch gekennzeichnet, dass das Bauelement der Rotor (1) eines Turboladers ist mit einem als Turbinenrad ausgebildeten Gamma-Titanaluminidkörper (5) und einem als Welle ausgebildeten Stahlkörper (2).

7. Verfahren zur Herstellung eines Bauelementes nach Anspruch 1, dadurch gekennzeichnet, dass beim Reibschweissen zunächst der Gamma-Titanaluminidkörper (5) und das Zwischenstück (4) unter einem Reibdruck, welcher einen ersten Grenzwert nicht überschreitet, gegeneinander verdreht werden, und dass anschliessend der Gamma-Titanaluminidkörper (5) und das Zwischenstück (4) bei relativer Ruhe zueinander unter einem Stauchdruck, welcher einen höher als der erste Grenzwert liegenden zweiten Grenzwert nicht überschreitet, unter Bildung einer zumindest Titan und Aluminium enthaltenden Diffusionsschicht (7) verschweisst werden.

8. Verfahren nach Anspruch 7, dadurch gekennzeichnet, dass der Reibdruck während des Verdrehens des Gamma-Titanaluminidkörpers (5) und des Zwischenstückes (4) gegeneinander stufenweise bis zum ersten Grenzwert erhöht wird.

9. Verfahren nach Anspruch 8, dadurch gekennzeichnet, dass der Reibdruck in einer ersten Stufe bis zu 150 N/mm² beträgt.

10. Verfahren nach Anspruch 9, dadurch gekennzeichnet, dass die Reibzeit in der erste Stufe höchstens 60 s und die gesamte Reibzeit höchstens 120 s beträgt.

11. Verfahren nach einem der Ansprüche 7 bis 10, dadurch gekennzeichnet, dass der erste Grenzwert ca. 200 N/mm² und der zweite Grenzwert ca. 300 N/mm² beträgt.

12. Verfahren nach einem der Ansprüche 7 bis 11, dadurch gekennzeichnet, dass die Verbindung zwischen dem Stahlkörper (2) und dem Zwischenstück (4) vor dem Reibschweissen des Gamma-Titanaluminidkörpers (5) und des Zwischenstückes (4) durch Reibschweissen hergestellt wird.

13. Verfahren nach Anspruch 12, dadurch gekennzeichnet, dass das Bauelement auf ca 600°C aufgeheizt und einige Stunden auf dieser Temperatur gehalten wird.

## Claims

1. Component comprising a body (5) composed of an alloy based on a γ-titanium aluminide, a steel body (2) and a connecting piece (4) composed of a nickel-base alloy having a nickel content of less than 65 per cent by weight, by means of which connecting piece (4) the γ-titanium aluminide body (5) and the steel body (2) are rigidly joined to one another, the joint between the γ-titanium aluminide body (5) and the connecting piece (4) being produced by friction welding, characterized in that the nickel-base alloy contains 3 to 7 per cent by weight of niobium.

2. Component according to Claim 1, characterized in that the nickel-base alloy contains between 10 and 30 per cent by weight of iron.

3. Component according to Claim 2, characterized in that the nickel-base alloy contains between 15 and 25 per cent by weight of iron.

4. Component according to any of Claims 1 to 3, characterized in that the nickel-base alloy contains
18-20 per cent by weight of chromium,
18-22 per cent by weight of iron,
2-4 per cent by weight of molybdenum,
4-6 per cent by weight of niobium,
up to 1 per cent by weight of aluminium,
up to 2 per cent by weight of titanium,
up to 0.4 per cent by weight of silicon,
up to 0.4 per cent by weight of manganese,
up to 0.05 per cent by weight of carbon, and
unavoidable impurities and nickel as the remainder.

5. Component according to any of Claims 1 to 4, characterized in that the connecting piece spaces the γ-titanium aluminide body and the steel body apart by approximately 10 to 30 mm.

6. Component according to any of Claims 1 to 5, characterized in that the component is the rotor (1) of a turbocharger, having a γ-titanium aluminide body (5) formed as turbine wheel and a steel body (2) formed as shaft.

7. Process for producing a component according to Claim 1, characterized in that the γ-titanium aluminide body (5) and the connecting piece (4) are first rotated against one another during friction welding under a rubbing pressure which does not exceed a first limit value, and that subsequently the γ-titanium aluminide body (5) and the connecting piece (4) are welded together at relative rest with respect to one another under an upsetting pressure, which does not exceed a second limit value which is higher than the first limit value, to form a diffusion layer (7) containing at least titanium and aluminium.

8. Process according to Claim 7, characterized in that the rubbing pressure during the rotation of the γ-titanium aluminide body (5) and the connecting piece (4) against one another is increased in steps up to the first limit value.

9. Process according to Claim 8, characterized in that the rubbing pressure in a first step is up to 150 N/mm².

10. Process according to Claim 9, characterized in that the rubbing time in the first step is not more than 60 s and the total rubbing time is not more than 120 s.

11. Process according to any of Claims 7 to 10, characterized in that the first limit value is approximately 200 N/mm² and the second limit value is approximately 300 N/mm².

12. Process according to any of Claims 7 to 11, characterized in that the joint between the steel body (2) and the connecting piece (4) is produced by friction welding before the friction welding of the γ-titanium aluminide body (5) and of the connecting piece (4).

13. Process according to Claim 12, characterized in that the component is heated to approximately 600°C and is kept at this temperature for a few hours.

## Revendications

1. Composant, comprenant un corps (5) en un alliage à base d'un aluminiure de titane gamma, un corps en acier (2) et une pièce intermédiaire (4) en un alliage à base de nickel avec une teneur en nickel inférieure à 65 % en poids, pièce intermédiaire (4) par laquelle le corps (5) en aluminiure de titane gamma et le corps en acier (2) sont rigidement assemblés l'un à l'autre, l'assemblage entre le corps (5) en aluminiure de titane gamma et la pièce intermédiaire (4) étant réalisé par soudage par friction, caractérisé en ce que l'alliage à base de nickel contient 3 à 7 % en poids de niobium.

2. Composant suivant la revendication 1, caractérisé en ce que l'alliage à base de nickel contient entre 10 et 30 % en poids de fer.

3. Composant suivant la revendication 2, caractérisé en ce que l'alliage à base de nickel contient entre 15 et 25 % en poids de fer.

4. Composant suivant l'une des revendications 1 à 3, caractérisé en ce que l'alliage à base de nickel contient
18 - 20 % en poids de chrome
18 - 22 % en poids de fer
2 - 4 % en poids de molybdène
4 - 6 % en poids de niobium
jusqu'à 1 % en poids de aluminium
jusqu'à 2 % en poids de titane
jusqu'à 0,4 % en poids de silicium
jusqu'à 0,4 % en poids de manganèse
jusqu'à 0,05 % en poids de carbone
le reste étant des impuretés inévitables et du nickel.

5. Composant suivant l'une des revendications 1 à 4, caractérisé en ce que la pièce intermédiaire écarte l'un de l'autre d'environ 10 à 30 mm le corps en aluminiure de titane gamma et le corps en acier.

6. Composant suivant l'une des revendications 1 à 5, caractérisé en ce que le composant est le rotor (1) d'un turbochargeur, avec un corps (5) en aluminiure de titane gamma constituant une roue de turbine et un corps en acier (2) constituant un arbre.

7. Procédé pour la fabrication d'un composant suivant la revendication 1, caractérisé en ce que, lors du soudage par friction, le corps (5) en aluminiure de titane gamma et la pièce intermédiaire (4) sont d'abord mis en rotation l'un contre l'autre sous une pression de friction qui ne dépasse pas une première valeur limite, et en ce que le corps (5) en aluminiure de titane gamma et la pièce intermédiaire (4) sont ensuite soudés l'un à l'autre, en position de repos relatif, sous une pression de contact qui ne dépasse pas une seconde valeur limite plus élevée que la première valeur limite, avec formation d'une couche de diffusion (7) contenant au moins du titane et de l'aluminium.

8. Procédé suivant la revendication 7, caractérisé en ce que la pression de friction est augmentée par paliers jusqu'à la première valeur limite pendant la rotation du corps (5) en aluminiure de titane gamma et de la pièce intermédiaire (4) l'un contre l'autre.

9. Procédé suivant la revendication 8, caractérisé en ce que la pression de friction atteint 150 N/mm² à un premier palier.

10. Procédé suivant la revendication 9, caractérisé en ce que la durée de friction au premier palier vaut au maximum 60 s et la durée totale de friction vaut au maximum 120 s.

11. Procédé suivant l'une des revendications 7 à 10, caractérisé en ce que la première valeur limite vaut environ 200 N/mm² et la seconde valeur limite environ 300 N/mm².

12. Procédé suivant l'une des revendications 7 à 11, caractérisé en ce que l'assemblage entre le corps en acier (2) et la pièce intermédiaire (4) est réalisé par soudage par friction avant le soudage par friction du corps (5) en aluminiure de titane gamma et de la pièce intermédiaire (4).

13. Procédé suivant la revendication 12, caractérisé en ce que le composant est chauffé à environ 600°C et est maintenu pendant quelques heures à cette température.
